# EUROPÄISCHE PATENTSCHRIFT

(11) **EP 2 294 909 B1**
(45) Veröffentlichungstag und Bekanntmachung des Hinweises auf die Patenterteilung: **21.03.2012**
(21) Anmeldenummer: 10168799.4
(22) Anmeldetag: 08.07.2010
(51) Int. Cl.: A01F 12/16

(54) **Steinfangmulde**
Stone trap
Trappe à cailloux

(30) Priorität: 15.09.2009 DE 102009041336
(43) Veröffentlichungstag der Anmeldung: 16.03.2011
(73) Patentinhaber: CLAAS Selbstfahrende Erntemaschinen GmbH, 33428 Harsewinkel (DE)
(72) Erfinder: Esken, Dirk, 59494, Soest-Meckingsen (DE); Meyer zu Rheda, Stefan, 33428, Harsewinkel (DE); Auf der Landwehr, Christian, 48231, Warendorf (DE)

(56) Entgegenhaltungen:
- EP-A1- 0 516 892
- EP-A1- 0 532 072
- EP-A1- 1 530 895

## Beschreibung

Die Erfindung betrifft eine Steinfangmulde für Erntemaschinen, die eine Fördervorrichtung zur Förderung eines aufgenommenen Gutstromes sowie ein der Fördervorrichtung nachgeordnetes Arbeitsaggregat zur Bearbeitung des Gutstromes umfassen, wobei die Steinfangmulde, die eine um eine Achse verschwenkbare Klappe aufweist, unterhalb des Übergangsbereiches zwischen der Fördervorrichtung und dem Arbeitsaggregat angeordnet ist, gemäß dem Oberbegriff des Anspruches 1.

Aus der EP 1 530 895 A1 ist eine Steinfangmulde der eingangs genannten Art an einem Mähdrescher bekannt, die unterhalb eines Übergangsbereiches zwischen Schrägförderer und Dreschkorb angeordnet ist. Die Steinfangmulde weist eine Vorderwand auf, die um eine quer zur Längsachse des Mähdreschers verlaufende Achse verschwenkbar ist, um die Vorderwand aus einer Erntebetriebsposition, in der Steine und dergleichen aus dem Gutstrom in die Steinfangmulde abgeschieden werden, in eine Steinauswurfposition zu überführen, in der die Steinfangmulde entleerbar ist, in dem der Inhalt der Steinfangmulde auf Grund der Schwerkraft aus dieser herausfallen kann.

Als nachteilig an dieser Steinfangmulde hat sich gezeigt, dass die selbsttätige Entleerung der Steinfangmulde beim Öffnen der Vorderwand nur unvollständig erfolgt. An den Wänden der Steinfangmulde lagert sich besonders unter feuchten Bedingungen ein Gemisch aus Steinen, Erde, Staub und Erntegut ab, welches eine verhärtete Ablagerung ausbildet, die nur unter Verwendung eines Werkzeuges lösbar ist. Hierzu ist es erforderlich, dass sich eine Bedienperson in einen Bereich unterhalb des Mähdreschers begibt, um die Steinfangmulde vollständig zu entleeren, wobei er auf Grund der Anordnung der Steinfangmulde unterhalb des Schrägförderers und des Dreschkorbes in einer unergonomischen Haltung arbeiten muss.

Aus der gattungsbildenden EP 0 532 072 A1 ist eine Steinfangmulde gemäß dem Oberbegriff des Anspruches 1 bekannt. Die dreieckige Steinfangmulde ist mit einer Tür versehen, an der eine Hebelanordnung befestigt ist. Endseitig der Hebelanordnung befindet sich ein rohrförmiges Abstreifelement, welches sich in geschlossener Position der Tür sich an der an die Tür anschließenden Rückwand abstützt. Während des Öffnens der Tür gleitet das Abstreifelement über die Oberfläche der Rückwand, bis es in vollständig geöffneter Position der Tür auf dieser zum Liegen kommt und keinen Kontakt zur Rückwand mehr hat. Nachteilig an dieser Steinfangmulde ist, dass das Absteifelement beim Öffnen der Tür über die Oberfläche streift und ein wiederholtes Öffnen und Schließen der Tür notwendig ist, um festsitzende Verschmutzungen auf der Rückwand entfernen zu können.

Aufgabe der vorliegenden Erfindung ist es, das Entleeren der Steinfangmulde zu vereinfachen und bedienerfreundlicher zu gestalten.

Diese Aufgabe wird erfindungsgemäß durch die kennzeichnenden Merkmale der unabhängigen Patentansprüche 1 oder 2 gelöst.

Vorteilhafte Weiterentwicklungen und Ausgestaltungen sind Gegenstand der Unteransprüche.

Gemäß dem unabhängigen Anspruch 1 wird vorgeschlagen, dass im Inneren der Steinfangmulde mindestens ein Abstreifelement an einer Seitenwand gelagert und mit der Klappe verbunden ist, so dass das mindestens eine Abstreifelement durch die Betätigung der Klappe positionsveränderbar ist, wobei das Abstreifelement als eine starre Strange ausgebildet ist, die an ihrem einen äußeren Ende um eine sich zu der Seitenwand vertikal erstreckenden Drehachse drehbar gelagert ist und mit ihrem gegenüberliegenden Ende über ein Kopplungselement mit der Klappe der Steinfangmulde verbunden ist. Durch das Öffnen der Klappe wird das mindestens eine Abstreifelement betätigt und in seiner derart Position verändert, dass die zur Positionsänderung aufgebrachte Kraft bewirkt, dass sich im Inneren der Steinfangmulde ausgebildete Ablagerungen durch das Bewegen des mindestens einen Abstreifelementes ablösen können. Das Schließen der Klappe führt dazu, dass das mindestens eine Abstreifelement in seine Ausgangsposition zurück überführt wird.

Gemäß dem unabhängigen Anspruch 2 wird zur Lösung der Aufgabe alternativ vorgeschlagen, dass im Inneren der Steinfangmulde mindestens ein federelastisches Abstreifelement an einer Seitenwand gelagert und mit der Klappe verbunden ist, so dass das mindestens eine Abstreifelement durch die Betätigung der Klappe formveränderbar ist. Bei diesem erfindungsgemäßen Vorschlag wird durch das Öffnen der Klappe insbesondere die Form des mindestens einen Abstreifelementes verändert, wodurch das Lösen der sich an den Wandungen und an dem mindestens einen Abstreifelement anhaftenden Ablagerungen bewirkt wird. Entsprechend wird durch das Schließen der Klappe erreicht, dass das mindestens eine Abstreifelement wieder seine Ausgangsform einnimmt.

Den beiden Lösungen ist gemeinsam, dass durch eine geeignete Auslegung der Federsteifigkeit des mindestens einen Abstreifelementes eine weitgehende Entleerung der Steinfangmulde erreicht werden kann, ohne dass eine Bedienperson diese zusätzlich manuell unter Zuhilfenahme eines Werkzeuges ausreinigen müsste.

Vorzugsweise kann das mindestens eine Abstreifelement über mindestens ein Kopplungselement mit der Klappe verbunden sein. Beim Öffnen zur Entleerung der Steinfangmulde wird das mindestens eine Abstreifelement in Abhängigkeit vom Öffnungswinkel der Klappe über das mindestens eine Kopplungselement aus einer Ausgangsposition in eine Entleerungsposition überführt, wobei das mindestens eine Abstreifelement zumindest über die Oberfläche der der Klappe gegenüberliegenden Seitenwand hinweg geführt wird. Diese Seitenwand ist der Eintrittsöffnung der Steinmulde im Übergangsbereich zwischen dem Schrägförderer und dem Dreschkorb zugewandt, so dass die sich auf dieser Seitenwand ausbildenden Ablagerungen sehr ausgeprägt sein können.

Für eine effiziente Entleerung der Steinfangmulde kann das mindestens eine Abstreifelement an der der Klappe gegenüberliegenden Seitenwand angeordnet sein.

Alternativ kann das mindestens eine Abstreifelement an zumindest einer sich senkrecht zur Klappe erstreckenden Seitenwand angeordnet sein.

Bei beiden Varianten erstreckt sich das mindestens eine Abstreifelement im Wesentlichen parallel zu der Seitenwand, um auf dieser anhaftende Ablagerungen durch die Positions- und/oder Formänderung des mindestens einen Abstreifelementes mit der Betätigung der Klappe durch eine parallel zu der Oberfläche der Seitenwand gerichtete Bewegung von dieser zu lösen.

Um eine möglichst vollständige Ablösung der Ablagerungen zu erreichen, kann sich das mindestens eine Abstreifelement im Wesentlichen über die Breite der Seitenwand erstrecken.

Insbesondere kann das mindestens eine Abstreifelement mit einem Endbereich oder in seinem Mittenbereich an einer der Seitenwände der Steinfangmulde gelagert sein. Beide Varianten der Lagerung des mindestens einen Abstreifelementes gestatten sowohl die positionsveränderliche als auch die formveränderliche Betätigung des mindestens einen Abstreifelementes durch das Öffnen und Schließen der Klappe der Steinfangmulde.

Vorzugsweise kann das mindestens eine Abstreifelement aus einem Federstahl bestehen. Ein aus diesem Material hergestelltes Abstreifelement besitzt die notwendige Flexibilität sowie die erforderliche Festigkeit, um festsitzende Ablagerungen aus der Steinfangmulde zu entfernen.

Das mindestens eine Abstreifelement kann beispielsweise als eine Stange ausgeführt sein, wobei die Stange aus einem Federstahl bestehen und in ihrem Mittenbereich gelagert sein kann, so dass das als Stange ausgeführte Abstreifelement sowohl in seiner Position als auch in seiner Form durch das Öffnen der Klappe verändert wird, um Ablagerungen in der Steinfangmulde zu lösen, indem beim Öffnen der Klappe über jeweils ein in den Endbereichen angeordnetes Betätigungselement das Abstreifelement verformt wird.

Alternativ kann das mindestens eine Abstreifelement als ein Blech ausgeführt sein, welches sich senkrecht zur Oberfläche der Seitenwand erstreckend angeordnet ist. Die Wirkungsweise ist dieselbe, wie sie weiter oben bereits beschrieben wurde.

In Vorteilhafter Weiterbildung kann vorgesehen sein, dass die Klappe hydraulisch betätigbar ist. Auf diese Weise wird eine hinreichend große Kraft über die Klappe und das mindestens eine Betätigungselement auf das Abstreifelement aufgebracht, um ein zuverlässiges Entleeren der Steinfangmulde sicherzustellen.

Die Erfindung wird nachstehend anhand eines in den Zeichnungen dargestellten Ausführungsbeispieles näher erläutert.

Es zeigen:
- Fig. 1: eine schematische Seitenansicht einer Steinfangmulde in Ernte- position;
- Fig. 2: eine schematische Detailfrontansicht I eines Abstreifelementes in der Steinfangmulde gemäß Fig. 1 in Ernteposition;
- Fig. 3: eine schematische Seitenansicht der Steinfangmulde gemäß Fig. 1 in Entleerungsposition;
- Fig. 4: eine schematische Detailfrontansicht III des Abstreifelementes in der Steinfangmulde gemäß Fig. 3 in Entleerungsposition.

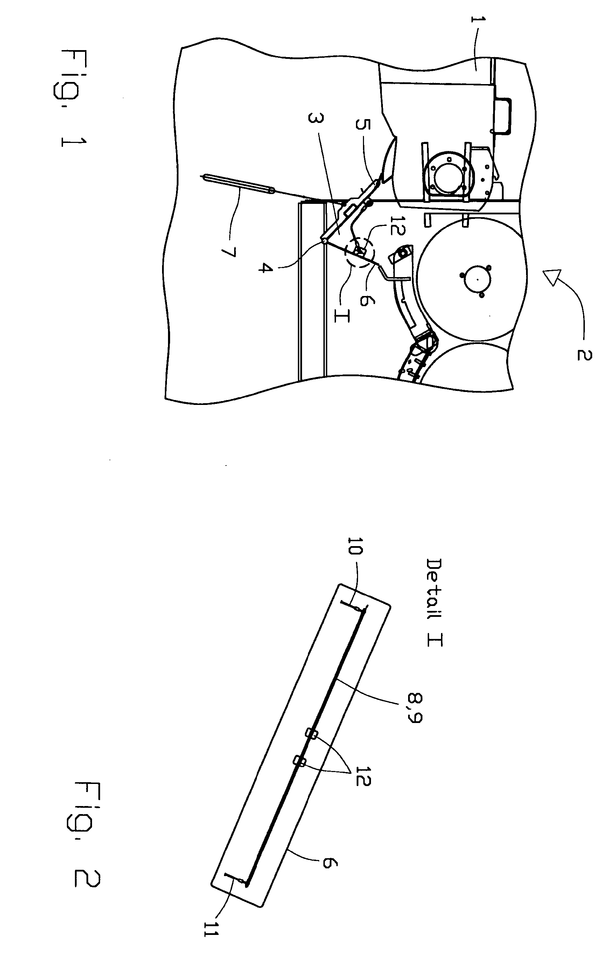

Fig.1 zeigt eine schematische Seitenansicht eines an sich bekannten und daher hier nicht näher beschriebenen Schrägförderers 1 sowie eines sich daran anschließenden Dreschwerkes 2 eines Mähdreschers, mit einer unterhalb des Übergangsbereiches zwischen dem Schrägförderer 1 und dem Dreschwerk 2 angeordneten Steinfangmulde 3. Die Steinfangmulde 3 weist eine um eine horizontale Achse 4 verschwenkbare Klappe 5, eine der Klappe 5 gegenüberliegende Seitenwand 6 sowie zwei parallel zueinander angeordnete, sich zwischen der Klappe 5 und der Seitenwand 6 erstreckende Wandungen, die auch Teil des Rahmens des Mähdreschers sein können, auf. Auf der dem Übergangsbereich zwischen dem Schrägförderer 1 und dem Dreschwerk 2 zugewandten Seite ist die Steinfangmulde 3 nach oben offen ausgeführt, um aus dem Gutstrom ausgeschiedene Fremdkörper, wie Steine oder dergleichen, aufnehmen zu können. Die Klappe 5 ist durch einen an ihr angeordneten Hydraulikzylinder 7 oder dergleichen betätigbar, um diese zu öffnen oder zu schließen beziehungsweise die Klappe 5 in einer geöffneten oder einer geschlossenen Position zu halten.

Während des Ernteprozesses nimmt die Steinfangmulde 3 Fremdkörper auf, die sich zusammen mit anderen Bestandteilen des Emtegutstromes insbesondere an der der Öffnung der Steinfangmulde 3 gegenüberliegenden Seitenwand 6 ablagern. Um diese Ablagerung selbsttätig beim Öffnen der Steinfangmulde 3 entfernen zu können, ist im Inneren der Steinfangmulde 3 ein Abstreifelement 8 angeordnet. Das Abstreifelement 8 ist als eine Federstahlstange 9 ausgebildet, die über mindestens ein Kopplungselement 10, wie beispielsweise ein Seil 11, einen Stab oder dergleichen, mit der Klappe 5 verbunden und an der der Klappe 5 gegenüberliegenden Seitenwand 6, vorzugsweise in einem Bereich oberhalb des unteren Drittels der Seitenwand 6, angeordnet ist. Die Federstahlstange 9 ist, wie in der schematisierten Detailfrontansicht I gemäß Fig. 2 dargestellt ist, in ihrem mittleren Bereich an der Seitenwand 6 in zumindest einer Aufnahme 12 angeordnet. Endseitig der Federstahltange 9 sind die Seile 11 angeordnet, mit denen die Federstahlstange 9 mit der Klappe 5 verbunden ist.

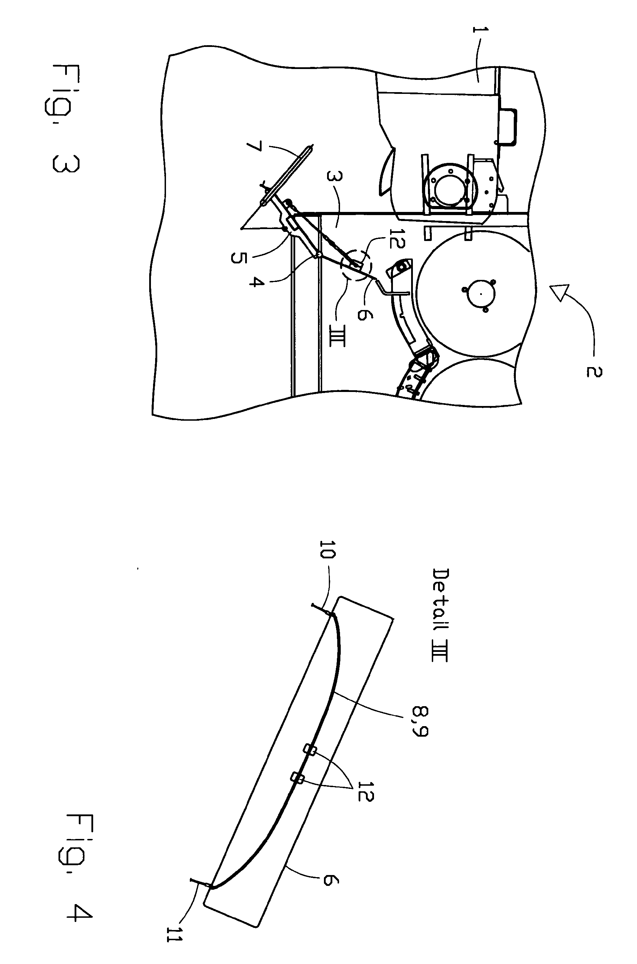

In Fig. 3 ist eine schematische Seitenansicht einer Steinfangmulde 3 gemäß Fig. 1 in ihrer Entleerungsposition dargestellt. In der Entleerungsposition der Steinfangmulde 3 ist die Klappe 5 durch den Hydraulikzylinder 7 geöffnet worden, so dass die in der Steinfangmulde 3 befindlichen Fremdkörper in bekannter Weise auf Grund von Schwerkraft herausfallen können. Zudem führt das Öffnen der Klappe 5 dazu, dass die Federstahlstange 9 eine Form- und Positionsänderung erfährt, da sie über die endseitig an der Federstahlstange 9 angeordneten Seile 11 um die Aufnahme 12 verschwenkt wird. Das Verschwenken der Federstahlstange 9 um die Aufnahme 12 bewirkt das Lösen der festsitzenden Ablagerungen auf der Seitenwand 6. Eine durch das Öffnen der Klappe erreichbare Form- und Positionsänderung der Federstahlstange 9 ist in der schematischen Detailfrontansicht III gemäß der Fig. 4 beispielhaft angedeutet.

Alternativ kann vorgesehen sein, dass das als Federstahlstange 9 ausgeführte Abstreifelement 8 mit einem äußeren Ende in einer Aufnahme angeordnet ist und nur an seinem gegenüberliegenden Ende über das Kopplungselement 10 mit der Klappe 5 verbunden ist.

In einer weiteren Ausgestaltung, die nicht figürlich dargestellt ist, könnte das Abstreifelement als eine starre Stange ausgeführt sein, die an ihrem einen äuβeren Ende um eine sich zu der Seitenwand vertikal erstreckende Drehachse drehbar gelagert ist und mit ihrem gegenüberliegenden Ende über das Kopplungselement mit der Klappe der Steinfangmulde verbunden ist. Beim Öffnen der Klappe wird die Stange um die Drehachse verschwenkt, so dass die Positionsänderung das Lösen von festsitzenden Ablagerungen in der Steinfangmulde bewirkt, um diese zu entleeren. Um die Stange beim Schließen der Klappe zurückzustellen, ist an der Drehachse beispielsweise eine Spiralfeder oder ein anderes, gleich wirkendes Rückstellmittel vorgesehen, wodurch eine entgegen der Bewegungsrichtung beim Öffnen der Klappe gerichtete Rückstellkraft auf das Abstreifelement aufgebracht wird, um das Abstreifelement beim Schließen der Klappe in seine Ausgangsposition zurückzuführen.

### Bezugszeichenliste

- 1: Schrägförderer
- 2: Dreschwerk
- 3: Steinfangmulde
- 4: Achse
- 5: Klappe
- 6: Seitenwand
- 7: Hydraulikzylinder
- 8: Abstreifelement
- 9: Federstahlstange
- 10: Koppelelement
- 11: Seil
- 12: Aufnahme

## Patentansprüche

1. Steinfangmulde (3) für Erntemaschinen, die eine Fördervorrichtung (1) zur Förderung eines aufgenommenen Gutstromes sowie ein der Fördervorrichtung (1) nachgeordnetes Arbeitsaggregat (2) zur Bearbeitung des Gutstromes umfassen, wobei die Steinfangmulde (3), die unterhalb des Übergangsbereiches zwischen der Fördervorrichtung (1) und dem Arbeitsaggregat (2) angeordnet ist,
eine um eine Achse (4) verschwenkbare Klappe (5) aufweist,
im Inneren der Steinfangmulde (3) mindestens ein Abstreifelement (8) an einer Seitenwand (6) gelagert und mit der Klappe (5) verbunden ist, so dass das mindestens eine Abstreifelement (8) durch die Betätigung der Klappe (5) positionsveränderbar ist, **dadurch gekennzeichnet, dass** das Abstreifelement (8) als eine starre Stange ausgebildet ist, die an ihrem einen äußeren Ende um eine sich zu der Seitenwand vertikal erstreckende Drehachse drehbar gelagert ist und mit ihrem gegenüberliegenden Ende üder ein Kopplungselement mit der Klappe (5) der Steinfangmulde (3) verbunden ist.

2. Steinfangmulde (3) für Erntemaschinen, die eine Fördervorrichtung (1) zur Förderung eines aufgenommenen Gutstromes sowie ein der Fördervorrichtung (1) nachgeordnetes Arbeitsaggregat (2) zur Bearbeitung des Gutstromes umfassen, wobei die Steinfangmulde (3), die unterhalb des Übergangsbereiches zwischen der Fördervorrichtung (1) und dem Arbeitsaggregat (2) angeordnet ist, eine um eine Achse (4) verschwenkbare Klappe (5) aufweist,
**dadurch gekennzeichnet,**
**dass** im Inneren der Steinfangmulde (3) mindestens ein federelastisches Abstreifelement (9) an einer Seitenwand (6) gelagert und mit der Klappe (5) verbunden ist, so dass das mindestens eine Abstreifelement (9) durch die Betätigung der Klappe (5) formveränderbar ist.

3. Steinfangmulde (3) nach einem der Ansprüche 1 oder 2, **dadurch gekennzeichnet, dass** das mindestens eine Abstreifelement (8) über mindestens ein Kopplungselement (10, 11) mit der Klappe (5) verbunden ist.

4. Steinfangmulde (3) nach Anspruch 2, **dadurch gekennzeichnet, dass** das mindestens eine Abstreifelement (8) an der der Klappe (5) gegenüberliegenden Seitenwand (6) angeordnet ist.

5. Steinfangmulde (3) nach einem der Ansprüche 1 bis 3, **dadurch gekennzeichnet, dass** das mindestens eine Abstreifelement (8) an zumindest einer sich senkrecht zur Klappe (5) erstreckenden Seitenwand (6) angeordnet ist.

6. Steinfangmulde (3) nach einem der Ansprüche 1 bis 5, **dadurch gekennzeichnet, dass** sich das mindestens eine Abstreifelement (8) im Wesentlichen über die Breite der Seitenwand (6) erstreckt.

7. Steinfangmulde (3) nach einem der Ansprüche 1 bis 6, **dadurch gekennzeichnet, dass** das mindestens eine Abstreifelement (8) mit einem Endbereich oder in seinem Mittenbereich an einer der Seitenwände (6) der Steinfangmulde (3) gelagert ist.

8. Steinfangmulde (3) nach einem der Ansprüche 1 bis 7, **dadurch gekennzeichnet, dass** das mindestens eine Abstreifelement (8) aus einem Federstahl besteht.

9. Steinfangmulde (3) nach einem der Ansprüche 1 bis 8, **dadurch gekennzeichnet, dass** das mindestens eine Abstreifelement (8) als eine Stange ausgeführt ist.

10. Steinfangmulde (3) nach einem der Ansprüche 1 bis 8, **dadurch gekennzeichnet, dass** das mindestens eine Abstreifelement (8) als ein Blech ausgeführt ist, welches sich senkrecht zur Oberfläche der Seitenwand (6) erstreckend angeordnet ist.

11. Steinfangmulde (3) nach einem der Ansprüche 1 bis 9, **dadurch gekennzeichnet, dass** die Klappe (5) zum Öffnen und Schließen der Steinfangmulde (3) hydraulisch betätigbar ist.

## Claims

1. A stone trap tray (3) for harvesting machines which include a conveyor device (1) for conveying a received flow of material and a working implement (2) arranged downstream of the conveyor device (1) for processing the flow of material, wherein the stone trap tray (3) arranged beneath the transitional region between the conveyor device (1) and the working implement (2) has a flap (5) pivotable about an axis (4),
in the interior of the stone trap tray (3) at least one stripping element (8) is mounted to a side wall (6) and connected to the flap (5) so that the at least one stripping element (8) can be altered in position by actuation of the flap (5), **characterised in that** the stripping element (8) is in the form of a rigid bar which at its one outer end is mounted rotatably about an axis of rotation extending vertically relative to the side wall and with its opposite end is connected by way of a coupling element to the flap (5) of the stone trap tray (3).

2. A stone trap tray (3) for harvesting machines which include a conveyor device (1) for conveying a received flow of material and a working implement (2) arranged downstream of the conveyor device (1) for processing the flow of material, wherein the stone trap tray (3) arranged beneath the transitional region between the conveyor device (1) and the working implement (2) has a flap (5) pivotable about an axis (4)
**characterised in that**
in the interior of the stone trap tray (3) at least one resilient stripping element (9) is mounted to a side wall (6) and connected to the flap (5) so that the at least one stripping element (9) can be altered in shape by actuation of the flap (5).

3. A stone trap tray (3) according to one of claims 1 and 2 **characterised in that** the at least one stripping element (8) is connected to the flap (5) by way of at least one coupling element (10, 11).

4. A stone trap tray (3) according to claim 2 **characterised in that** the at least one stripping element (8) is arranged at the side wall (6) opposite to the flap (5).

5. A stone trap tray (3) according to one of claims 1 to 3 **characterised in that** the at least one stripping element (8) is arranged at at least one side wall (6) extending perpendicularly to the flap (5).

6. A stone trap tray (3) according to one of claims 1 to 5 **characterised in that** the at least one stripping element (8) extends substantially over the width of the side wall (6).

7. A stone trap tray (3) according to one of claims 1 to 6 **characterised in that** the at least one stripping element (8) is mounted with an end region or in its central region at one of the side walls (6) of the stone trap tray (3).

8. A stone trap tray (3) according to one of claims 1 to 7 **characterised in that** the at least one stripping element (8) comprises a spring steel.

9. A stone trap tray (3) according to one of claims 1 to 8 **characterised in that** the at least one stripping element (8) is in the form of a bar.

10. A stone trap tray (3) according to one of claims 1 to 8 **characterised in that** the at least one stripping element (8) is in the form of a plate arranged to extend perpendicularly to the surface of the side wall (6).

11. A stone trap tray (3) according to one of claims 1 to 9 **characterised in that** the flap (5) is hydraulically actuable for opening and closing the stone trap tray (3).

## Revendications

1. Trappe à cailloux (3) pour machines récolteuses, qui comprennent un dispositif de transport (1) pour le transport d'un flux de matières recueilli ainsi qu'un groupe de travail (2) installé en aval du dispositif de transport (1) pour le traitement du flux de matières, dans laquelle la trappe à cailloux (3), qui est disposée en dessous de la zone de transfert entre le dispositif de transport (1) et le groupe de travail (2), présente un clapet (5) pouvant pivoter autour d'un axe (4), au moins un élément de raclage (8) est monté sur une paroi latérale (6) à l'intérieur de la trappe à cailloux (3) et est relié au clapet (5), de telle manière que ledit au moins un élément de raclage (8) puisse changer de position par l'actionnement du clapet (5), **caractérisée en ce que** l'élément de raclage (8) est réalisé sous la forme d'une barre rigide, qui est montée par sa première extrémité extérieure de façon rotative autour d'un axe de rotation s'étendant verticalement à la paroi latérale et qui est reliée par son extrémité opposée au clapet (5) de la trappe à cailloux (3) au moyen d'un élément de couplage.

2. Trappe à cailloux (3) pour machines récolteuses, qui comprennent un dispositif de transport (1) pour le transport d'un flux de matières recueilli ainsi qu'un groupe de travail (2) installé en aval du dispositif de transport (1) pour le traitement du flux de matières, dans laquelle la trappe à cailloux (3), qui est disposée en dessous de la zone de transfert entre le dispositif de transport (1) et le groupe de travail (2), présente un clapet (5) pouvant pivoter autour d'un axe (4), **caractérisée en ce qu'**au moins un élément de raclage élastique à ressort (9) est monté sur une paroi latérale (6) à l'intérieur de la trappe à cailloux (3) et est relié au clapet (5), de telle manière que ledit au moins un élément de raclage (9) puisse changer de forme par l'actionnement du clapet (5).

3. Trappe à cailloux (3) selon l'une quelconque des revendications 1 ou 2, **caractérisée en ce qu'**au moins un élément de raclage (8) est relié au clapet (5) au moyen d'au moins un élément de couplage (10, 11).

4. Trappe à cailloux (3) selon la revendication 2, **caractérisée en ce que** ledit au moins un élément de raclage (8) est disposé sur la paroi latérale (6) opposée au clapet (5).

5. Trappe à cailloux (3) selon l'une quelconque des revendications 1 à 3, **caractérisée en ce que** ledit au moins un élément de raclage (8) est disposé sur au moins une paroi latérale (6) s'étendant perpendiculairement au clapet (5).

6. Trappe à cailloux (3) selon l'une quelconque des revendications 1 à 5, **caractérisée en ce que** ledit au moins un élément de raclage (8) s'étend essentiellement sur la largeur de la paroi latérale (6).

7. Trappe à cailloux (3) selon l'une quelconque des revendications 1 à 6, **caractérisée en ce que** ledit au moins un élément de raclage (8) est monté par une première région d'extrémité ou dans sa région centrale sur une des parois latérales (6) de la trappe à cailloux (3).

8. Trappe à cailloux (3) selon l'une quelconque des revendications 1 à 7, **caractérisée en ce que** ledit au moins un élément de raclage (8) se compose d'un acier à ressort.

9. Trappe à cailloux (3) selon l'une quelconque des revendications 1 à 8, **caractérisée en ce que** ledit au moins un élément de raclage (8) est réalisé sous la forme d'une barre.

10. Trappe à cailloux (3) selon l'une quelconque des revendications 1 à 8, **caractérisée en ce que** ledit au moins un élément de raclage (8) est réalisé sous la forme d'une tôle, qui est disposée de façon à s'étendre perpendiculairement à la surface de la paroi latérale (6).

11. Trappe à cailloux (3) selon l'une quelconque des revendications 1 à 9, **caractérisée en ce que** le clapet (5) peut être actionné par voie hydraulique pour ouvrir et fermer la trappe à cailloux (3).
